# NEUE EUROPÄISCHE PATENTSCHRIFT

(11) **EP 2 136 119 B2**
(45) Veröffentlichungstag und Bekanntmachung des Hinweises auf die Entscheidung über den Einspruch: **12.09.2018**
(45) Hinweis auf die Patenterteilung: 01.12.2010
(21) Anmeldenummer: 08010964.8
(22) Anmeldetag: 17.06.2008
(51) Int. Cl.: F16L 19/028

(54) **Rohranschlusseinrichtung für den Anschluss von Rohrleitungen**
Pipe connection device for attaching pipes
Dispositif de raccordement de tuyaux pour le branchement de conduites

(43) Veröffentlichungstag der Anmeldung: 23.12.2009
(73) Patentinhaber: TI Automotive (Heidelberg) GmbH, 69123 Heidelberg (DE)
(72) Erfinder: Abbott, Sebastian, 69123 Heidelberg (DE); Fiedler, Uwe, 68766 Hockenheim (DE); Sausner, Andreas, 60389 Frankfurt (DE)
(74) Vertreter: Rohmann, Michael

(56) Entgegenhaltungen:
- EP-A- 0 997 677
- EP-A- 1 624 183
- EP-A1- 1 624 183
- DE-A- 1 775 018
- DE-C1- 19 507 715
- DE-C3- 2 211 138

## Beschreibung

Die Erfindung betrifft eine Rohranschlusseinrichtung gemäß dem Oberbegriff des Anspruchs 1.

Schraubelemente bzw. Rohranschlusseinrichtungen der vorstehend beschriebenen Art sind aus der Praxis in verschiedenen Ausführungsformen bekannt. Insbesondere sind als Schraubfittings ausgebildete Schraubelemente bekannt, mit denen eine Rohrleitung, insbesondere eine Kraftfahrzeugrohrleitung an ein Anschlusselement anschließbar ist. Diese bekannten Schraubfittings sind in der Regel mit einer Beschichtung, insbesondere mit einer Korrosionsschutzbeschichtung versehen, die normalerweise den gesamten Fitting bedeckt. Die Beschichtung wird beispielsweise im Tauchverfahren oder Sprühverfahren aufgebracht. Bei Schraubverbindungen mit diesen bekannten Schraubfittings kann es zu einem unerwünschten Lockern oder sogar Lösen der Schraubverbindung kommen. Das gilt insbesondere für Schraubfittings mit angeschlossenen Rohrleitungen. Beim Verschrauben solcher Schraubfittings kann es zu einem Mitdrehen der Rohrleitung kommen und durch eine Torsion der Rohrleitung wird Federkraft gleichsam in der Rohrleitung gespeichert. Die Torsion der Rohrleitung erzeugt ein Rückdrehmoment, das zu einem unerwünschten bzw. unkontrollierten Lockern bzw. Lösen der Schraubverbindung führen kann. Ein unerwünschtes Lockern oder Lösen der Schraubverbindung kann insbesondere auch durch Vibrationen hervorgerufen werden, wie sie beispielsweise in Kraftfahrzeugen auftreten.

Es sind auch Schraubelemente bzw. Schraubfittings bekannt, die im Bereich ihres Gewindes mit einer Adhäsivbeschichtung versehen sind. Dadurch wird der Schraubfitting nach dem Verschrauben fixiert und ein unerwünschtes Lockern bzw. Lösen der Schraubverbindung kann zumindest weitgehend vermieden werden. Solche Adhäsivbeschichtungen sind aber vor allem dann nicht zweckmäßig, wenn Schraubverbindungen zu einem späteren Zeitpunkt beabsichtigt wieder gelöst werden sollen.

EP-A0 997 677 beschreibt ein Schraubelement für den Anschluss von Rohrleitungen.

Eine gattungsgemäße Rohranschlusseinrichtung ist aus EP-A 1624 183 bekannt. Um bei dem Anziehen des Schraubelementes ein Mitdrehen der Rohrleitung zu vermeiden, ist ein separates Druckelement vorgesehen, welches ein Rutschen des Schraubelementes gegenüber der Rohrleitung ermöglicht.

Der Erfindung liegt das technische Problem zugrunde, eine Rohranschlusseinrichtung der eingangs beschriebenen Art anzugeben, mit dem ein unerwünschtes Lockern oder Lösen der zugeordneten Schraubverbindung auf einfache, effektive und funktionssichere Weise vermieden werden kann.

Es liegt im Rahmen der Erfindung, dass die zweite Beschichtung auf der zumindest einen Kontaktfläche die Außenoberfläche im Bereich der Kontaktfläche bildet bzw. die äußerste Beschichtung der Kontaktfläche ist. Zweckmäßigerweise ist das Gewinde vollständig bzw. im Wesentlichen vollständig mit der ersten Beschichtung versehen. Vorzugsweise ist die Kontaktfläche vollständig bzw. im Wesentlichen vollständig mit der zweiten Beschichtung versehen. Es liegt im Übrigen im Rahmen der Erfindung, dass die erste Beschichtung keine Adhäsivbeschichtung ist.

Nach sehr bevorzugter Ausführungsform, der im Rahmen der Erfindung besondere Bedeutung zukommt, ist das Schraubelement ein Schraubenbolzen bzw. ein Schraubfitting, der ein als Außengewinde ausgebildetes Gewinde aufweist. Dann ist dieses Außengewinde des Schraubenbolzens bzw. Schraubfittings zumindest bereichsweise und vorzugsweise vollständig bzw. im Wesentlichen vollständig mit der ersten Beschichtung versehen. Nach einer empfohlenen Ausführungsform handelt es sich bei dem Schraubelement um einen Schraubfitting, an den eine Rohrleitung angeschlossen ist. Gemäß bevorzugter Ausführungsform durchgreift die Rohrleitung den Schraubfitting in Axialrichtung und hintergreift das Stimende des Schraubfittings mit einem Rohrleitungsende. Das Rohrleitungsende ist dabei empfohlenermaßen als Bördel ausgebildet. Die Ausführungsform mit dem Schraubfitting bzw. weitere diesbezügliche Ausführungsvarianten werden weiter unten noch näher erläutert.

Es empfiehlt sich, dass die zumindest eine gewindefreie Kontaktfläche bzw. die gewindefreien Kontaktflächen des Schraubelementes senkrecht bzw. quer oder im Wesentlichen senkrecht bzw. im Wesentlichen quer zur Einschraubrichtung des Schraubelementes orientiert sind. Gemäß empfohlener Ausführungsform weist das Stimende des Schraubenbolzens bzw. Schraubfittings eine gewindefreie Kontaktfläche auf, die zumindest bereichsweise mit der zweiten Beschichtung mit dem zweiten Reibwert µ₂ beschichtet ist. Zweckmäßigerweise ist diese gewindefreie Kontaktfläche am Stimende des Schraubenbolzens bzw. Schraubfittings vollständig mit der zweiten Beschichtung versehen bzw. beschichtet.

Es liegt weiterhin im Rahmen der Erfindung, dass der Schraubenbolzen bzw. Schraubfitting einen Schraubenkopf aufweist und dass die gewindeseitige Unterseite des Schraubenkopfs eine gewindefreie Kontaktfläche aufweist, die zumindest bereichsweise mit der zweiten Beschichtung mit dem zweiten Reibwert µ₂ beschichtet ist. Zweckmäßigerweise ist diese gewindefreie Kontaktfläche an der Unterseite des Schraubenkopfes vollständig bzw. im Wesentlichen vollständig mit der zweiten Beschichtung versehen.

Nach einer Ausführungsform der Erfindung ist das Schraubelement eine Schraubenmutter, die ein als Innengewinde ausgebildetes Gewinde aufweist. Dann ist dieses Innengewinde zumindest bereichsweise und vorzugsweise vollständig bzw. im Wesentlichen vollständig mit der ersten Beschichtung beschichtet. Die Schraubenmutter dient zur Aufnahme eines Schraubenbolzens bzw. Schraubfittings und empfohlenermaßen zur Aufnahme eines erfindungsgemäß beschichteten Schraubenbolzens bzw. Schraubfittings. Bei der Schraubenmutter kann es sich um eine Anschlussmuffe mit Innengewinde zur Verbindung zweier Rohrleitungen handeln oder um eine Sackbohrung mit Innengewinde in einem Anschlussblock für eine anzuschließende Rohrleitung. Es liegt im Rahmen der Erfindung, dass ein Kontaktflansch der Anschlussmuffe eine gewindefreie Kontaktfläche aufweist/ist, die dann zumindest bereichsweise und vorzugsweise vollständig bzw. im Wesentlichen vollständig mit der zweiten Beschichtung versehen ist. Gemäß einer Ausführungsform der Erfindung ist sowohl ein Schraubenbolzen bzw. Schraubfitting erfindungsgemäß beschichtet als auch eine dem Schraubenbolzen zugeordnete Schraubenmutter erfindungsgemäß beschichtet.

Vorteilhafterweise beträgt der erste Reibwert µ₁ zumindest das Doppelte, vorzugsweise zumindest das Dreifache und besonders bevorzugt zumindest das Vierfache des zweiten Reibwertes µ₂. Gemäß einer Ausführungsform beträgt der erste Reibwert µ₁ zumindest das Fünffache des zweiten Reibwertes µ₂.

Eine Ausführungsvariante des erfindungsgemäßen Schraubelementes ist dadurch gekennzeichnet, dass die erste Beschichtung mit dem ersten Reibwert µ₁ sowohl auf das Gewinde als auch auf die zumindest eine gewindefreie Kontaktfläche aufgebracht ist und dass die zweite Beschichtung mit dem zweiten Reibwert µ₂ auf die zumindest eine gewindefreie Kontaktfläche - die erste Beschichtung dort überdeckend - aufgebracht ist. Zunächst wird also das gesamte Schraubelement oder zumindest das Gewinde und die gewindefreien Kontaktflächen des Schraubelementes mit der ersten Beschichtung versehen und dann wird die zweite Beschichtung im Bereich der gewindefreien Kontaktfläche bzw. im Bereich der gewindefreien Kontaktflächen auf die erste Beschichtung aufgebracht, so dass die zweite Beschichtung die Außenoberfläche an den gewindefreien Kontaktflächen bildet. Die erste Beschichtung wird bei dieser Ausführungsform zweckmäßigerweise durch ein Tauchverfahren aufgebracht. Die zweite Beschichtung kann im Zuge eines Sprühverfahrens aufgebracht werden.

Eine andere Ausführungsform der Erfindung ist dadurch gekennzeichnet, dass die erste Beschichtung mit dem ersten Reibwert µ₁ lediglich auf das Gewinde zumindest bereichsweise aufgebracht ist und dass die zweite Beschichtung mit dem zweiten Reibwert µ₂ lediglich auf die zumindest eine gewindefreie Kontaktfläche aufgebracht ist. Bei dieser Ausführungsform wird also die erste Beschichtung lediglich auf das Gewinde und nicht auf die zumindest eine gewindefreie Kontaktfläche aufgebracht und die zweite Beschichtung wird auf die zumindest eine gewindefreie Kontaktfläche ohne Zwischenschaltung der ersten Beschichtung aufgebracht. Bei dieser Ausführungsform können die erste und die zweite Beschichtung beispielsweise jeweils im Zuge eines Sprühverfahrens aufgebracht werden.

Gemäß einer empfohlenen Ausführungsvariante handelt es sich bei der ersten Beschichtung um eine aluminiumhaltige Korrosionsschutzbeschichtung, die zumindest ein den Reibwert der Beschichtung erhöhendes Gleitmittel aufweist bzw. enthält. - Vorzugsweise weist die zweite Beschichtung zumindest ein den Reibwert der Beschichtung erniedrigendes Gleitmittel auf und dieses Gleitmittel ist zweckmäßigerweise Polytetrafluorethylen (PTFE) und/oder Molybdändisulfid (MoS₂).

Empfohlenermaßen beträgt der Reibwert µ₁ der ersten Beschichtung 0,15 bis 0,5, vorzugsweise 0,2 bis 0,45 und bevorzugt 0,25 bis 0,4. Ein Reibwert µ₁ zwischen 0,3 und 0,4, beispielsweise 0,35 hat sich bewährt, - Es empfiehlt sich, dass der Reibwert µ₂ der zweiten Beschichtung 0,02 bis 0,2, vorzugsweise 0,02 bis 0,15 und bevorzugt 0,03 bis 0,1 beträgt. Es hat sich bewährt. dass der Reibwert µ₂ der zweiten Beschichtung zwischen 0,03 und 0,08 liegt und beispielsweise 0,05 beträgt.

Zweckmäßigerweise beträgt die Schichtdicke der ersten Beschichtung 2 µm bis 25 µm und vorzugsweise 3 µm bis 20 µm. - Empfohlenermaßen beträgt die Schichtdicke der zweiten Beschichtung 5 µm bis 25 µm und bevorzugt 5 µm bis 20 µm.

Das Schraubelement mit der angeschlossenen Rohrleitung ist an ein Anschlusselement durch Verschraubung anschließbar. Gemäß einer bevorzugten Ausführungsform handelt es sich bei dem vorgenannten Schraubelement um einen Schraubenbolzen oder um einen Schraubfitting mit angeschlossener Rohrleitung. Das Anschlusselement kann dann eine Anschlussmuffe mit angeschlossener zweiter Rohrleitung sein. Die Schraubverbindung dient dann also zur Verbindung zweier Rohrleitungen, insbesondere Kraftfahrzeugrohrleitungen. Wie oben bereits dargelegt, kann es sich bei dem Anschlusselement auch um eine Sackbohrung in einem Anschlussblock handeln, in die der Schraubenbolzen bzw. der Schraubfitting mit der angeschlossenen Rohrleitung einschraubbar ist.

Eine besonders bevorzugte Ausführungsform der Erfindung ist dadurch gekennzeichnet, dass das Schraubelement ein Schraubfitting mit einer Axialbohrung ist, welche Axialbohrung von der Rohrleitung durchfasst wird, wobei die Rohrleitung an ihrem Rohrleitungsende einen Bördel aufweist und wobei das mit der zweiten Beschichtung versehene Stimende des Schraubfittings an der Bördelrückseite des Bördels anliegt. Es liegt auch im Rahmen der Erfindung, dass die Bördelrückseite des Rohrleitungsendes mit der zweiten Beschichtung versehen ist. Es liegt weiterhin im Rahmen der Erfindung, dass das Gewinde des Schraubfittings mit der ersten Beschichtung versehen ist. Zweckmäßigerweise liegt das Stimende des Schraubfittings zumindest bereichsweise formschlüssig an der Bördelrückseite an. Nach einer Ausführungsform der Erfindung ist der Bördel am Rohrleitungsende ein F-Bördel, dessen Bördelrückseite senkrecht bzw. im Wesentlichen senkrecht zur Rohrleitungslängsachse orientiert ist und das Stimende des Schraubfittings weist dann zumindest einen senkrecht oder im Wesentlichen senkrecht zur Rohrleitungslängsachse orientierten Flächenabschnitt auf, der formschlüssig an der Bördelrückseite anliegt. Zweckmäßigerweise läuft der Flächenabschnitt über den Umfang des Schraubfittings um. Nach einer anderen Ausführungsform der Erfindung ist der Bördel am Rohrleitungsende ein E-Bördel, dessen Bördelrückseite konusförmig bzw. im Wesentlichen konusförmig ausgebildet ist und das Stimende des Schraubfittings weist zumindest einen konusförmigen oder im Wesentlichen konusförmig ausgebildeten Flächenabschnitt auf, der formschlüssig an der Bördelrückseite anliegt. Zweckmäßigerweise läuft dieser Flächenabschnitt über den Umfang des Schraubfittings um. Grundsätzlich kann der Bördel am Rohrleitungsende auch andere Formen aufweisen. In jedem Fall wird bevorzugt, dass das Stimende des Schraubfittings zumindest bereichsweise und empfohlenermaßen über den gesamten Umfang des Schraubfittings formschlüssig an der Bördelrückseite des Rohrleitungsendes anliegt.

Gemäß einer weiteren empfohlenen Ausführungsform der Erfindung ist das Schraubelement eine Schraubenmutter mit einer Axialbohrung, welche Axialbohrung von der Rohrleitung durchfasst wird, wobei die Rohrleitung an ihrem Rohrleitungsende einen Bördel aufweist, wobei die Schraubenmutter einen mit der zweiten Beschichtung versehenen, innenseitigen Kontaktflansch aufweist und wobei der Bördel der Rohrleitung mit seiner Bördelrückseite an dem Kontaktflansch anliegt. Vorzugsweise liegt der Kontaktflansch zumindest bereichsweise und bevorzugt über den gesamten Umfang des Bördels formschlüssig an der Bördelrückseite an. Gemäß einer Ausführungsvariante ist der Bördel ein F-Bördel, dessen Bördelrückseite senkrecht oder im Wesentlichen senkrecht zur Rohrleitungslängsachse orientiert ist und der Kontaktflansch der Schraubenmutter weist zumindest einen senkrecht oder im Wesentlichen senkrecht zur Rohrleitungslängsachse orientierten Flächenabschnitt auf, der formschlüssig an der Bördelrückseite anliegt. Gemäß einer weiteren Ausführungsvariante ist der Bördel ein E-Bördel, dessen Bördelrückseite konusförmig bzw. im Wesentlichen konusförmig ausgebildet ist und der Kontaktflansch der Schraubenmutter weist zumindest einen konusförmigen oder im Wesentlichen konusförmig ausgebildeten Flächenabschnitt auf, der formschlüssig an der Bördelrückseite anliegt. Es liegt im Rahmen der Erfindung, dass die Schraubenmutter ein Innengewinde zur Aufnahme eines Anschlusselementes aufweist und dieses Innengewinde ist mit der ersten Beschichtung versehen.

Oben wurde dargelegt, dass nach einer bevorzugten Ausführungsform der Erfindung das Schraubelement ein Schraubfitting ist, und dass das Stimende des Schraubfittings im montierten Zustand der Rohranschlusseinrichtung an der Bördelrückseite des Bördels am Rohrleitungsende anliegt. Beim Anziehen des Schraubfittings übt dieser eine axiale Anpresskraft Fₐₓ auf die Bördelrückseite aus und überträgt ein Drehmoment M auf die Bördelrückseite und damit auf die Rohrleitung. Dieses Drehmoment M ist messbar. Sinn der zweiten Beschichtung am Stimende des Schraubfittings ist die Minimierung des übertragenen Drehmomentes M. Es liegt im Rahmen der Erfindung, dass mit der zweiten Beschichtung am Stimende des Schraubfittings bei einer Axialkraft von Fₐₓ = 11 kN ein Drehmoment von 0,2 bis 2,5 Nm, vorzugsweise von 0,2 bis 2,2 Nm, bevorzugt von 0,2 bis 2,0 Nm und sehr bevorzugt von 0,2 bis 1,5 Nm übertragen wird. Ohne zweite Beschichtung am Stimende des Schraubfittings wird bei einer Axialkraft von Fₐₓ = 11 kN ein Drehmoment von größer als 3 Nm bzw. deutlich größer als 3 Nm übertragen. Es versteht sich, dass das übertragene Drehmoment mit der jeweiligen Kontaktfläche zwischen Schraubfitting und Bördel zunimmt. Die vorstehend angegebenen Werte gelten insbesondere für erfindungsgemäß beschichtete metallische Schraubfittings und metallische Bördel und insbesondere für Schraubfittings mit Gewindedurchmessem zwischen 8 und 16 mm, vorzugsweise zwischen 10 und 14 mm. Die Durchmesser der zugeordneten Bördel liegen in der Größenordnung der Gewindedurchmesser.

Die Erfindung wird nachfolgend anhand von zwei Ausführungsbeispielen näher erläutert:
Nach einem ersten Ausführungsbeispiel wird ein Schraubenbolzen bzw. ein Schraubfitting zunächst vollständig bzw. im Wesentlichen vollständig mit der ersten Beschichtung versehen, bei der es sich um eine Korrosionsschutzbeschichtung handelt, die empfohlenermaßen Aluminium enthält. Fernerhin enthält diese erste Beschichtung zumindest ein den Reibwert der ersten Beschichtung beeinflussendes Gleitmittel. Es empfiehlt sich, die erste Beschichtung mit einer Schichtdicke von 10 bis 20 µm, beispielsweise 15 µm aufzubringen. Der Reibwert µ₁ dieser ersten Beschichtung beträgt vorzugsweise 0,25 bis 0,45, bevorzugt 0,3 bis 0,4 und beispielsweise 0,35. Anschließend wird dann die zweite Beschichtung mit dem zweiten Reibwert µ₂ lediglich im Bereich der gewindefreien Kontaktflächen aufgebracht, nämlich an der Stirnendfläche des Schraubenbolzens bzw. Schraubfittings und an der gewindeseitigen Unterseite des Schraubenkopfs des Schraubenbolzens bzw. Schraubfittings.
Die zweite Beschichtung überdeckt im Bereich der gewindefreien Kontaktflächen also die erste Beschichtung. Es liegt im Rahmen der Erfindung, dass die zweite Beschichtung zumindest ein den Reibwert der Beschichtung erniedrigendes Gleitmittel aufweist. Zweckmäßigerweise handelt es sich bei diesem Gleitmittel um Polytetrafluorethylen (PTFE) und/oder Molybdändisulfid (MoS₂). Empfohlenermaßen enthält die zweite Beschichtung sowohl Polytetrafluorethylen als auch Molybdändisulfid. Die zweite Beschichtung wird vorzugsweise in einer Schichtdicke von 5 bis 15 µm, beispielsweise 10 µm aufgebracht.
Der Reibwert µ₂ der zweiten Beschichtung beträgt zweckmäßigerweise 0,02 bis 0.08, bevorzugt 0,03 bis 0,07 und beispielsweise 0,05.

Im Rahmen eines zweiten Ausführungsbeispiels wird auf einen Schraubenbolzen bzw. Schraubfitting zunächst eine Korrosionsschutzbeschichtung aufgebracht. Zweckmäßigerweise wird diese Korrosionsschutzbeschichtung auf die gesamte Oberfläche des Schraubfittings aufgebracht und zwar vorzugsweise elektrolytisch. Bei der Korrosionsschutzbeschichtung handelt es sich empfohlenermaßen um eine Zink-Nickel-Beschichtung. Die Schichtdicke dieser Korrosionsschutzbeschichtung beträgt vorzugsweise 4 bis 12 µm, bevorzugt 6 bis 10 µm und beispielsweise 8 µm. Anschließend wird auf diese Korrosionsschutzbeschichtung selektiv im Bereich des Gewindes des Schraubfittings die erste Beschichtung mit dem hohen ersten Reibwert µ₁ aufgebracht. Die Schichtdicke dieser ersten Beschichtung beträgt empfohlenermaßen 2 bis 8 µm, vorzugsweise 3 bis 7 µm und beispielsweise 5 µm. Es liegt im Rahmen der Erfindung, dass diese erste Beschichtung zumindest ein den Reibwert der Beschichtung beeinflussendes Gleitmittel aufweist bzw. enthält. Daraufhin wird die zweite Beschichtung mit dem zweiten niedrigeren Reibwert µ₂ auf den gewindefreien Kontaktflächen aufgebracht, nämlich an der Stimendfläche des Schraubfittings und an der Unterseite des Schraubenkopfes des Schraubfittings. Die zweite Beschichtung enthält zur Herabsetzung des Reibwertes Polytetrafluorethylen (PTFE) und Molybdändisulfid (MoS₂). Die Schichtdicke dieser zweiten Beschichtung beträgt zweckmäßigerweise 10 bis 20 µm, beispielsweise 15 µm. Bei diesem zweiten Ausführungsbeispiel kann auch zuerst die vorgenannte zweite Beschichtung selektiv aufgebracht werden und anschließend die vorgenannte erste Beschichtung selektiv aufgebracht werden.

Der Erfindung liegt die Erkenntnis zugrunde, dass aufgrund der erfindungsgemäßen Lehre bzw. aufgrund der erfindungsgemäßen Beschichtung des Schraubelementes ein unbeabsichtigtes Lockern oder Lösen der zugeordneten Schraubverbindung auf einfache Weise sowie effektiv und funktionssicher vermieden werden kann. Durch die erfindungsgemäße Aufbringung verschiedener Beschichtungen kann das erfindungsgemäße technische Problem überraschend wirksam gelöst werden. Der Erfindung liegt insoweit die Erkenntnis zugrunde, dass die Beschichtung mit hohem Reibwert im Bereich des Gewindes ein unbeabsichtigtes Lösen der Schraubverbindung effektiv erschwert. Die Beschichtung mit niedrigerem Reibwert im Bereich der Kontaktflächen verringert bzw. verhindert dagegen die Übertragung von Torsionskräften auf die zu verbindenden Teile bzw. Rohrenden. Dadurch wird also ein eingangs erläutertes Rückdrehmoment deutlich verringert oder sogar vollständig vermieden. Die gezielten Beschichtungen in verschiedenen Bereichen des Schraubelementes können auf einfache und präzise Weise vorgenommen werden, so dass der erfindungsgemäße Erfolg problemlos erzielbar ist. Die erfindungsgemäßen Schraubelemente eignen sich vor allem für die Verbindung von Rohrleitungen, insbesondere von Kraftfahrzeugrohrleitungen. Kraftfahrzeugrohrleitungen meint dabei vor allem Rohrleitungen für Kraftstoffe oder Bremsflüssigkeit.

Nachfolgend wird die Erfindung anhand einer lediglich ein Ausführungsbeispiel darstellenden Zeichnung näher erläutert. Es zeigen in schematischer Darstellung:
- Fig. 1: eine Ansicht eines als Schraubfitting ausgebildeten Schraubelementes,
- Fig. 2: den Gegenstand gemäß Fig. 1 in einer anderen Ausführungsform,
- Fig. 3: eine erste Ausführungsform einer erfindungsgemäßen Rohran- schlusseinrichtung und
- Fig. 4: den Gegenstand nach Fig. 3 in einer zweiten Ausführungsform.

Die Figuren zeigen ein als Schraubfitting 1 ausgebildetes erfindungsgemäßes Schraubelement, das vorzugsweise und im Ausführungsbeispiel für den Anschluss einer Rohrleitung 2 vorgesehen ist. Bei der Rohrleitung 2 mag es sich um eine Kraftfahrzeugrohrleitung handeln. Der Schraubfitting 1 weist ein Gewinde 3 sowie gewindefreie Kontaktflächen 4, 5 auf. Die gewindefreie Kontaktfläche 4 ist am Stimende des Schraubfittings 1 angeordnet und die gewindefreie Kontaktfläche 5 ist an der gewindeseitigen Unterseite des Schraubenkopfes 6 angeordnet. Das Gewinde 3 bzw. Außengewinde des Schraubfittings 1 ist vorzugsweise und im Ausführungsbeispiel vollständig mit einer ersten Beschichtung 7 versehen, die einen ersten höheren Reibwert µ₁ aufweist. Die beiden gewindefreien Kontaktflächen 4, 5 sind vorzugsweise und im Ausführungsbeispiel vollständig mit einer zweiten Beschichtung 8 versehen, die einen zweiten niedrigeren Reibwert µ₂ aufweist. Nach bevorzugter Ausführungsform und im Ausführungsbeispiel beträgt der erste Reibwert µ₁ zumindest das Fünffache, vorzugsweise zumindest das Sechsfache des Reibwertes µ₂.

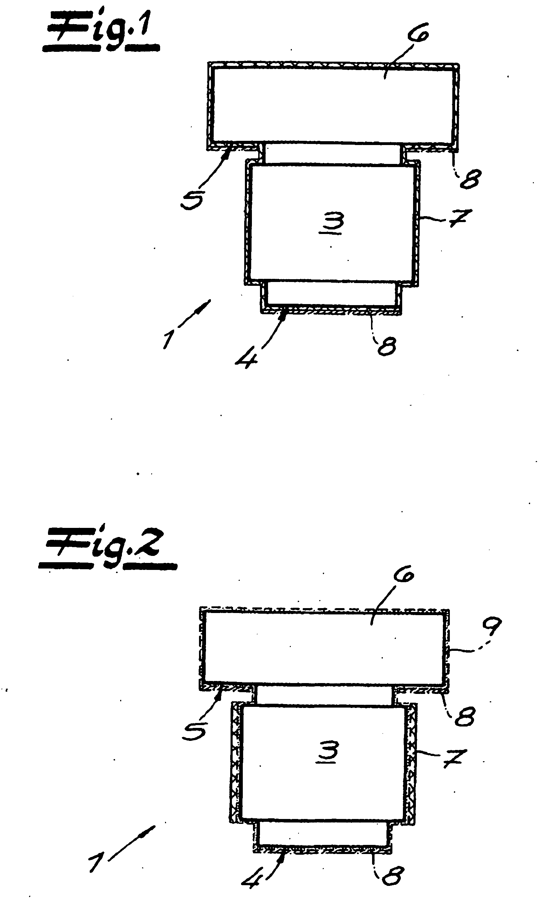

Die Fig. 1 zeigt eine erste Ausführungsform eines erfindungsgemäßen Schraubfittings 1. Hier wurde zunächst auf die gesamte Oberfläche des Schraubfittings 1 die erste Beschichtung 7 mit dem ersten Reibwert µ₁ aufgebracht. Diese erste Beschichtung wurde also in einem ersten Schritt auch auf die gewindefreien Kontaktflächen 4, 5 aufgebracht. Die erste Beschichtung 7 kann insbesondere im Zuge eines Tauchverfahrens aufgebracht werden. Zweckmäßigerweise und im Ausführungsbeispiel handelt es sich bei der ersten Beschichtung 7 um eine aluminiumhaltige Korrosionsschutzbeschichtung, der zumindest ein den Reibwert der Beschichtung 7 beeinflussendes Gleitmittel zugesetzt ist. Der Reibwert µ₁ der ersten Beschichtung 7 beträgt zweckmäßigerweise und in diesem Ausführungsbeispiel 0,33 bis 0,37, beispielsweise 0,35. In einem zweiten Schritt wird bei dieser Ausführungsform die zweite Beschichtung 8 mit dem zweiten niedrigeren Reibwert µ₂ lediglich auf die gewindefreien Kontaktflächen 4,5 - unter Zwischenschaltung der ersten Beschichtung 7 - aufgebracht. Diese zweite Beschichtung 8 kann beispielsweise im Rahmen eines Sprühverfahrens aufgebracht werden. Der Reibwert der zweiten Beschichtung 8 mag vorzugsweise und in diesem Ausführungsbeispiel 0,03 bis 0,07 und beispielsweise 0,05 betragen.

Bei der Ausführungsform gemäß Fig. 2 wird zunächst eine (gesonderte) Korrosionsschutzbeschichtung 9 auf die gesamte Oberfläche des Schraubfittings 1 aufgebracht. Bei dieser Korrosionsschutzbeschichtung handelt es sich zweckmäßigerweise und im Ausführungsbeispiel um eine elektrolytisch aufgebrachte Zink-Nickel-Korrosionsschutzbeschichtung. In einem zweiten Schritt wird die erste Beschichtung 7 mit dem ersten höheren Reibwert µ₁ im Bereich des Gewindes 3 auf die Korrosionsschutzbeschichtung 9 aufgebracht. Die erste Beschichtung 7 bildet dann im Bereich des Gewindes 3 die Außenoberfläche des Schraubfittings 1. In einem dritten Schritt wird daraufhin die zweite Beschichtung 8 mit dem zweiten niedrigeren Reibwert µ₂ im Bereich der gewindefreien Kontaktflächen 4, 5 auf die Korrosionsschutzbeschichtung 9 aufgebracht. Die zweite Beschichtung 8 bildet dann im Bereich der gewindefreien Kontaktflächen 4, 5 die Außenoberfläche des Schraubfittings 1.

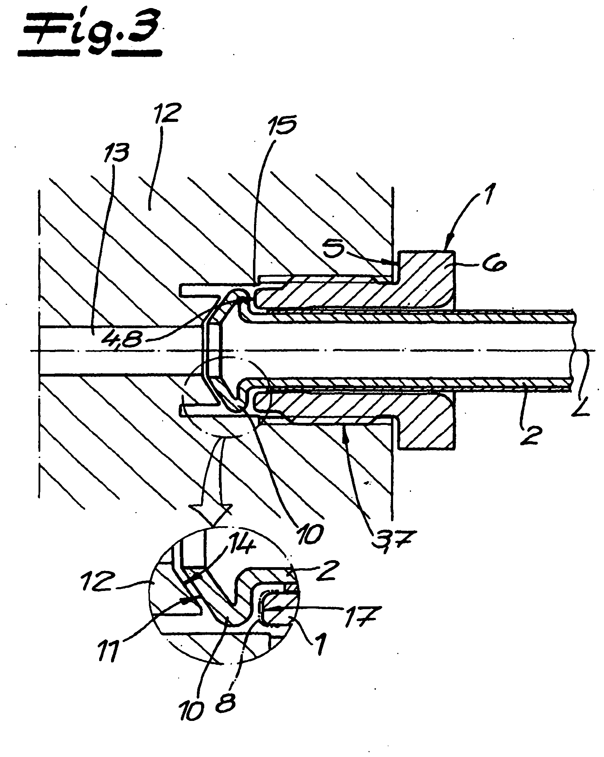

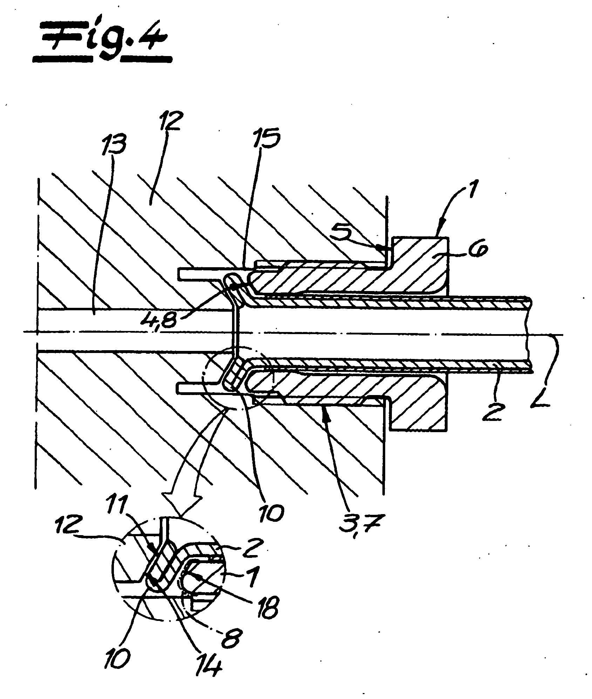

Die Figuren 3 und 4 zeigen einen erfindungsgemäßen Schraubfitting 1 im Betriebszustand bzw. eine erfindungsgemäße Rohranschlusseinrichtung mit einem erfindungsgemäßen Schraubfitting 1. Eine Rohrleitung 2 durchfasst den Schraubfitting 1 in axialer Richtung. Die Rohrleitung 2 weist an einem Ende ein Stirnelement auf, das im Ausführungsbeispiel als Bördel 10 ausgebildet ist. Es liegt im Rahmen der Erfindung, dass es sich um einen metallischen Bördel 10 handelt, der vorzugsweise und im Ausführungsbeispiel einstückig an das Rohrleitungsende angeformt ist. Der Schraubfitting 1 ist im Ausführungsbeispiel nach den Fig. 3 und 4 in ein als Anschlussblock 12 ausgebildetes Anschlusselement eingeschraubt. welcher Anschlussblock 12 eine integrierte zweite Rohrleitung 13 aufweist. Der Schraubfitting 1 drückt den Bördel 10 mit seiner stirnseitigen Dichtfläche 11 an eine Anschlussfläche 14 des Anschlussblocks 12. Der Schraubfitting 1 wird dazu mit seinem Gewinde 3 bzw. Außengewinde in die Sackbohrung 15 des Anschlussblocks 12 eingeschraubt. Es versteht sich, dass die Sackbohrung 15 ein entsprechendes komplementäres Innengewinde aufweist. Das Gewinde 3 bzw. Außengewinde des Schraubfittings 1 ist mit der ersten Beschichtung 7 versehen. Die gewindefreie Kontaktfläche 4 am Stimende des Schraubfittings 1 weist die zweite Beschichtung 8 auf.

Im Ausführungsbeispiel nach Fig. 3 ist der Bördel 10 des Rohrleitungsendes ein F-Bördel, dessen Bördelrückseite quer bzw. senkrecht zur Rohrleitungslängsachse angeordnet ist. Das mit der zweiten Beschichtung 8 versehene Stimende des Schraubfittings 1 weist einen komplementären senkrecht zur Rohrleitungslängsachse L angeordneten Flächenabschnitt 17 auf, der formschlüssig an der Bördelrückseite des F-Bördels anliegt.

Im Ausführungsbeispiel nach Fig. 4 ist der Bördel 10 des Rohrleitungsendes ein E-Bördel, dessen Bördelrückseite konusförmig ausgebildet ist. Das Stimende des zugeordneten Schraubfittings 1 weist einen konusförmigen Flächenabschnitt 18 auf, der formschlüssig an der Bördelrückseite des E-Bördels anliegt. Im Bereich des formschlüssigen Anliegens der Bördel 10 ist sowohl im Ausführungsbeispiel nach Fig. 3 als auch im Ausführungsbeispiel nach Fig. 4 die zweite Beschichtung 8 vorgesehen.

## Patentansprüche

1. Rohranschlusseinrichtung für den Anschluss von Rohrleitungen (2), insbesondere von Kraftfahrzeugrohrleitungen, mit einem Schraubelement,
wobei das Schraubelement ein Gewinde (3) aufweist sowie zumindest eine gewindefreie Kontaktfläche (4, 5),
wobei an das Schraubelement eine Rohrleitung (2) angeschlossen ist und dass das Schraubelement an ein Anschlusselement durch Verschraubung anschließbar ist,
**dadurch gekennzeichnet, dass** das Gewinde (3) zumindest bereichsweise mit einer ersten Beschichtung (7) versehen ist, die einen ersten Reibwert (µ₁) aufweist,
wobei die Kontaktfläche (4, 5) zumindest bereichsweise mit einer zweiten Beschichtung (8) versehen ist, die einen zweiten Reibwert (µ₂) aufweist,
dass der erste Reibwert (µ₁) größer ist als der zweite Reibwert (µ₂),
dass die erste Beschichtung (7) auf dem Gewinde (3) die Außenoberfläche im Bereich des Gewindes (3) bildet.

2. Rohranschlusseinrichtung nach Anspruch 1, wobei das Schraubelement ein Schraubenbolzen bzw. Schraubfitting ist, der ein als Außengewinde ausgebildetes Gewinde (3) aufweist.

3. Rohranschlusseinrichtung nach Anspruch 2, wobei das Stirnende des Schraubenbolzens bzw. Schraubfittings (1) eine gewindefreie Kontaktfläche (4, 5) aufweist, die zumindest bereichsweise mit der zweiten Beschichtung (8) mit dem zweiten Reibwert (µ₂) beschichtet ist.

4. Rohranschlusseinrichtung nach einem der Ansprüche 2 oder 3, wobei der Schraubenbolzen bzw. Schraubfitting (1) einen Schraubenkopf (6) aufweist und -wobei die gewindeseitige Unterseite des Schraubenkopfs (6) eine gewindefreie Kontaktfläche (4, 5) aufweist, die zumindest bereichsweise mit der zweiten Beschichtung (8) mit dem zweiten Reibwert (µ₂) beschichtet ist.

5. Rohranschlusseinrichtung nach Anspruch 1, wobei das Schraubelement eine Schraubenmutter ist, die ein als Innengewinde ausgebildetes Gewinde (3) aufweist.

6. Rohranschlusseinrichtung nach einem der Ansprüche 1 bis 5, wobei der Reibwert (µ₁) der ersten Beischichtung 0,15 bis 0,5, vorzugsweise 0,2 bis 0,45 und bevorzugt 0,25 bis 0,4 beträgt.

7. Rohranschlusseinrichtung nach einem der Ansprüche 1 bis 6, wobei der Reibwert (µ₂) der zweiten Beschichtung (8) 0,02 bis 0,2, vorzugsweise 0,02 bis 0,15 und bevorzugt 0,03 bis 0,1 beträgt.

8. Rohranschlusseinrichtung nach einem der Ansprüche 1 bis 7, wobei die Schichtdicke der ersten Beschichtung (7) 2 µₘ bis 25 µm und vorzugsweise 3 µm bis 20 µm beträgt.

9. Rohranschlusseinrichtung nach einem der Ansprüche 1 bis 8, wobei die Schichtdicke der zweiten Beschichtung (8) 5 µm bis 25 µm und vorzugsweise 5 µm bis 20 µm beträgt.

10. Rohranschlusseinrichtung nach einem der Ansprüche 1 bis 9, wobei das Schraubelement ein Schraubfitting (1) mit einer Axialbohrung ist, welche Axialbohrung von einer Rohrleitung (2) durchfasst wird, wobei die Rohrleitung (2) an ihrem Rohrleitungsende einen Bördel (10) aufweist und wobei das mit der zweiten Beschichtung (8) versehene Stirnende des Schraubfittings (1) an der Bördelrückseite des Bördels (10) anliegt.

11. Rohranschlusseinrichtung nach einem der Ansprüche 1 bis 10, wobei das Schraubelement eine Schraubenmutter mit einer Axialbohrung ist, welche Axialbohrung von einer Rohrleitung (2) durchfasst wird, wobei die Rohrleitung (2) an ihrem Rohrleitungsende einen Bördel (10) aufweist, wobei die Schraubenmutter einen mit der zweiten Beschichtung (8) versehenen innenseitigen Kontaktflansch aufweist und wobei der Bördel (10) der Rohrleitung (2) mit seiner Bördelrückseite an dem Kontaktflansch anliegt.

12. Rohranschlusseinrichtung nach einem der Ansprüche 1 bis 11, wobei der Bördel (10) ein F-Bördel ist, dessen Bördelrückseite senkrecht bzw. im Wesentlichen senkrecht zur Rohrleitungslängsachse (L) angeordnet ist und wobei das Stirnende des Schraubfittings (1) und/oder der Kontaktflansch der Schraubenmutter zumindest einen senkrecht bzw. im Wesentlichen senkrecht zur Rohrleitungslängsachse (L) orientierten Flächenabschnitt (17) aufweist, der formschlüssig an der Bördelrückseite anliegt.

13. Rohranschlusseinrichtung nach einem der Ansprüche 1 bis 11, wobei der Bördel (10) ein E-Bördel ist, dessen Bördelrückseite konusförmig bzw. im Wesentlichen konusförmig ausgebildet ist und wobei das Stirnende des Schraubfittings (1) und/oder der Kontaktflansch der Schraubenmutter zumindest einen konusförmigen bzw. im Wesentlichen konusförmig ausgebildeten Flächenabschnitt (18) aufweist, der formschlüssig an der Bördelrückseite anliegt.

## Claims

1. A pipe connecting means for connecting pipes (2), in particular motor vehicle pipes, with a screw element,
wherein the screw element has a thread (3), along with at least one unthreaded contact surface (4, 5),
wherein a pipe (2) is connected to the screw element, and the screw element can be connected to a connecting element by screwing,
**characterized in that** at least areas of the thread (3) are provided with a first coating (7) having a first friction coefficient (µ₁),
wherein at least areas of the contact surface (4, 5) are provided with a second coating (8) having a second friction coefficient (µ₂),
that the first friction coefficient (µ₁) is larger than the second friction coefficient (µ₂),
that the first coating (7) on the thread (3) forms the outer surface in the area of the thread (3).

2. The pipe connecting means according to claim 1, wherein the screw element is a screw bolt or screw fitting with a thread (3) designed as a male thread.

3. The pipe connecting means according to claim 2, wherein the front end of the screw bolt or screw fitting (1) has an unthreaded contact surface (4, 5), at least areas of which are coated with the second coating (8) having the second friction coefficient (µ₂).

4. The pipe connecting means according to one of claims 2 or 3, wherein screw bolt or screw fitting (1) has a screw head (6), and wherein the thread-side underside of the screw head (6) has an unthreaded contact surface (4, 5), at least areas of which are covered with the second coating (8) having the second friction coefficient (µ₂).

5. The pipe connecting means according to claim 1, wherein the screw element is a nut with a thread (3) designed like a female thread.

6. The pipe connecting means according to one of claims 1 to 5, wherein the friction coefficient (µ₁) of the first coating measures 0.15 to 0.5, preferably 0.2 to 0.45, and primarily 0.25 to 0.4.

7. The pipe connecting means according to one of claims 1 to 6, wherein the friction coefficient (µ₂) of the second coating (8) measures 0.02 to 0.2, preferably 0.02 to 0.15, and primarily 0.03 to 0.1.

8. The pipe connecting means according to one of claims 1 to 7, wherein the layer thickness of the first coating (7) measures 2 µm to 25 µm, and preferably 3 µm to 20 µm.

9. The pipe connecting means according to one of claims 1 to 8, wherein the layer thickness of the second coating (8) measures 5 µm to 25 µm, and preferably 5 µm to 20 µm.

10. The pipe connecting means according to one of claims 1 to 9, wherein the screw element is a screw fitting (1) with an axial bore, with a pipe (2) passing through the axial bore, wherein the pipe end of the pipe (2) has a bead (10), and wherein the front end of the screw fitting (1) provided with the second coating (8) abuts against the rear bead side of the bead (10).

11. The pipe connecting means according to one of claims 1 to 10, wherein the screw element is a nut with an axial bore, with a pipe (2) passing through the axial bore, wherein the pipe end of the pipe (2) has a bead (10), wherein the nut has an interior contact flange provided with the second coating (8), and wherein the rear bead side of the bead (10) of the pipe (2) abuts against the contact flange.

12. The pipe connecting means according to one of claims 1 to 11, wherein the bead (10) is an F-bead, the rear bead side of which is arranged perpendicular or essentially perpendicular to the longitudinal pipe axis (L), and wherein the front end of the screw fitting (1) and/or the contact flange of the nut has at least one surface section (17) that is oriented perpendicular or essentially perpendicular to the longitudinal pipe axis (L) and positively abuts against the rear bead side.

13. The pipe connecting means according to one of claims 1 to 11, wherein the bead (10) is an E-bead, the rear bead side of which is conical or essentially conical in design, and wherein the front end of the screw fitting (1) and/or the contact flange of the nut has at least one conical or essentially conical surface section (18) that positively abuts against the rear bead side.

## Revendications

1. Dispositif de raccord de conduit pour le raccordement de conduits (2), notamment de conduits de véhicule automobile, avec un élément fileté,
l'élément fileté comportant un filetage (3) ainsi qu'au moins une surface de contact sans filetage (4, 5),
un conduit (2) étant raccordé à l'élément fileté et l'élément fileté pouvant être raccordé par vissage à un élément de raccord,
**caractérisé en ce que** le filetage (3) est doté au moins par secteur d'un premier revêtement (7), qui comporte un premier coefficient de frottement (µ₁),
la surface de contact (4, 5) étant dotée au moins par secteur d'un deuxième revêtement (8), qui comporte un deuxième coefficient de frottement (µ₂),
**en ce que** le premier coefficient de frottement (µ₁) est supérieur au deuxième coefficient de frottement (µ₂),
**en ce que** le premier revêtement (7) forme sur le filetage (3) la surface extérieure dans le secteur du filetage (3).

2. Dispositif de raccord de conduit selon la revendication 1, l'élément fileté est un boulon fileté ou raccord fileté, qui comporte un filetage (3) constitué sous la forme d'un filetage extérieur.

3. Dispositif selon la revendication 2, l'extrémité avant du boulon fileté ou raccord fileté (1) comportant une surface de contact sans filetage (4, 5), qui est revêtue au moins par secteur d'un deuxième revêtement (8) avec le deuxième coefficient de frottement (µ₂).

4. Dispositif de raccord de conduit selon l'une quelconque des revendications 2 ou 3, le boulon fileté ou raccord fileté (1) comportant une tête filetée (6) et la face inférieure côté filetage de la tête filetée (6) comportant une surface de contact sans filetage (4, 5), qui est revêtue au moins par secteur du deuxième revêtement (8) avec le deuxième coefficient de frottement (µ₂).

5. Dispositif de raccord de conduit selon la revendication 1, l'élément fileté étant un écrou fileté qui, comporte un filetage constitué sous la forme d'un filetage intérieur (3).

6. Dispositif de raccord de conduit selon l'une quelconque des revendications 1 à 5, le coefficient de frottement (µ₁) du premier revêtement est de 0,15 à 0,5, de préférence de 0,2 à 0,45 et de préférence de 0,25 à 0,4.

7. Dispositif de raccord de conduit selon l'une quelconque des revendications 1 à 6, le coefficient de frottement (µ₂) du deuxième revêtement (8) étant de 0,02 à 0,2, de préférence de 0,02 à 0,15 et de préférence de 0,03 à 0,1.

8. Dispositif de raccord de conduit selon l'une quelconque des revendications 1 à 7, l'épaisseur de couche du premier revêtement (7) étant de 2 µm à 25 µm et de préférence de 3 µm à 20 µm.

9. Dispositif de raccord de conduit selon l'une quelconque des revendications 1 à 8, l'épaisseur de couche du deuxième revêtement (8) étant de 5 µm à 25 µm et de préférence de 5 µm à 20 µm.

10. Dispositif de raccord de conduit selon l'une quelconque des revendications 1 à 9, l'élément fileté étant un raccord fileté (1) avec un trou axial, lequel trou axial est traversé par un conduit (2), le conduit (2) comportant une collerette (10) à son extrémité de conduit et l'extrémité avant du raccord fileté (1) doté du deuxième revêtement (8) venant en application sur la face arrière de collerette de la collerette (10) .

11. Dispositif de raccord de conduit selon l'une quelconque des revendications 1 à 10, l'élément fileté étant un écrou fileté avec un trou axial, lequel trou axial est traversé par un conduit (2), le conduit (2) comportant une collerette (10) à son extrémité de conduit, l'écrou fileté comportant une bride de contact côté intérieur dotée du deuxième revêtement (8) et la collerette (10) du conduit (2) venant en application avec sa face arrière de collerette sur la bride de contact.

12. Dispositif de raccord de conduit selon l'une quelconque des revendications 1 à 11, la collerette (10) étant une collerette F, dont la face arrière de collerette est disposée perpendiculairement ou pour l'essentiel perpendiculaire à l'axe longitudinal de conduit (L) et l'extrémité avant du raccord fileté (1) et/ou la bride de contact de l'écrou fileté comportant au moins une section de surface (17) orientée perpendiculairement ou pour l'essentiel perpendiculaire à l'axe longitudinal de conduit (L), qui vient en application par conformité de forme sur la face arrière de collerette.

13. Dispositif de raccord de conduit selon l'une quelconque des revendications 1 à 11, la collerette (10) étant une collerette E, dont la face arrière de collerette est constitué de forme conique ou pour l'essentiel conique et l'extrémité avant du raccord fileté (1) et/ou la bride de contact de l'écrou fileté comporte au moins une section de surface (18) constituée de forme conique ou pour l'essentiel conique, qui vient en application par conformité de forme sur la face arrière de collerette.
